# EUROPEAN PATENT SPECIFICATION

(11) **EP 3 112 741 B1**
(45) Date of publication and mention of the grant of the patent: **06.11.2019**
(21) Application number: 15174784.7
(22) Date of filing: 01.07.2015
(51) Int. Cl.: F21V 5/04, F21V 14/02, F21V 21/14, G02B 19/00, F21V 7/00, F21K 99/00, G02B 7/02, G02B 7/08, F21V 14/06, F21V 5/00

(54) **LUMINOUS SYSTEM**
LEUCHTSYSTEM
SYSTÈME LUMINEUX

(43) Date of publication of application: 04.01.2017
(73) Proprietor: Chun Kuang Optics Corp, Hsinchu County (TW)
(72) Inventor: HUANG, Hsin-Chieh, 303 Hsinchu County (TW); TENG, Shun-Wen, 303 Hsinchu County (TW); WANG, Shun, 303 Hsinchu County (TW)
(74) Representative: Dantz, Jan Henning

(56) References cited:
- EP-A1- 2 541 298
- WO-A1-2014/045188
- CN-U- 202 469 588
- US-A1- 2006 158 899
- US-A1- 2009 086 498
- US-A1- 2010 014 286
- US-A1- 2012 182 711
- US-A1- 2013 258 663
- US-A1- 2014 307 444
- US-B1- 7 222 995

## Description

### BACKGROUND OF THE INVENTION

### Field of the Invention

The present disclosure relates to a luminous system, and in particular to a luminous system with variable focus.

### Description of Related Art

Light is electromagnetic radiation within a certain portion of the electromagnetic spectrum. When light encounters an object, it is transmitted, reflected, absorbed, or refracted depending on the composition of the object and the wavelength of the light. Flashlights or headlights are lighting apparatus for providing convergent light with a highly narrow light pattern. The turn signal and the taillight, however, are lighting apparatus for providing divergent light and a wide light pattern. A light emitting diode is a kind of semiconductor device, which exploits the property of direct bandgap semiconductor material to convert electric energy into light energy efficiently and has advantages of small volume, high response time, long service time, low power consumption, high stability, and is developed to replace the traditional non-directivity light tube and incandescent lamp.

The commercial lamp holder with a light emitting diode usually uses a second lens to adjust the light pattern of light generated from the light emitting diode. The distance between the second lens and the light emitting diode is fixed for providing an invariable light pattern, however, it is inconvenient for the user to apply the lamp holder in a different field.

US 2010/0014286 A1 discloses a light irradiation apparatus comprising an optical unit having a solid transparent body and an LED emitting light in the solid transparent body. The solid transparent body is part of a light irradiation block, and a position adjustment mechanism can set a distance between the light irradiation block and a concave lens for adjusting the light on an irradiation plane.

### SUMMARY OF THE INVENTION

The invention is defined by the features of claim 1. According to one aspect of the present disclosure, a luminous system is used for projecting light to a plane. The luminous system includes a luminous component and an angle-adjustable device. The luminous component is used for generating the light ray. The angle-adjustable device is used for adjusting the luminous angle of the light ray. The angle-adjustable device is arranged between the plane and the luminous component and located on the route of the light ray, the angle-adjustable device comprises a first lens element, and the first lens element comprises a light-emitting portion and a light-incident portion connected to the light-emitting portion. The light-incident portion comprises a recess opposite to the light-emitting portion. An outer diameter of the light-emitting portion is larger than an outer diameter of the light-incident portion, and the outer diameter of the light-incident portion decreases along a direction away from the light-emitting portion.

The angle-adjustable device allows the luminous angle of the luminous system to be adjustable, thus the light pattern of the luminous system can also be adjusted according to the object.

### BRIEF DESCRIPTION OF DRAWINGS

The present disclosure can be more fully understood by reading the following detailed description of the embodiment, with reference made to the accompanying drawings as follows:
FIG. 1 is a perspective view of a luminous system according to a first embodiment of the present disclosure which is not part of the invention;
FIG. 2 is an exploded view of the luminous system according to the first embodiment of the present disclosure;
FIG. 3 is another exploded view of the luminous system according to the first embodiment of the present disclosure;
FIG. 4 is a sectional view of the luminous system according to the first embodiment of the present disclosure;
FIG. 5 is another sectional view of the luminous system according to the first embodiment of the present disclosure;
FIG. 6 is a sectional view of a luminous system according to a second embodiment of the present disclosure which is not part of the invention;
FIG. 7 is another sectional view of a luminous system according to the second embodiment of the present disclosure;
FIG. 8 is a perspective view of a luminous system according to a third embodiment of the present disclosure according to the invention;
FIG. 9 is a sectional view of the luminous system according to the third embodiment of the present disclosure;

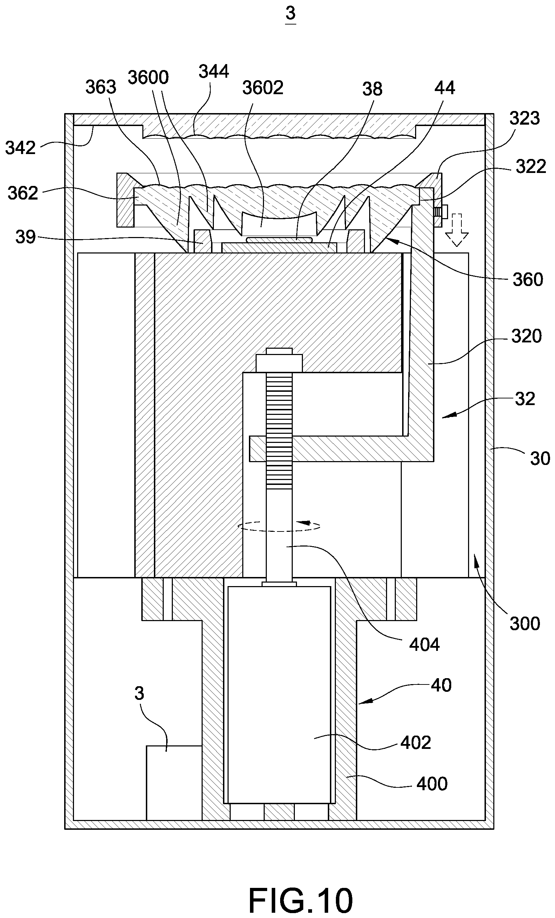

FIG. 10 is another sectional view of the luminous system according to the third embodiment of the present disclosure;
FIG. 11 is a schematic view of the luminous intensity distribution of the luminous system according to the present disclosure; and
FIG. 12 is another schematic view of the luminous intensity distribution of the luminous system according to the present disclosure.

### DETAILED DESCRIPTION OF THE INVENTION

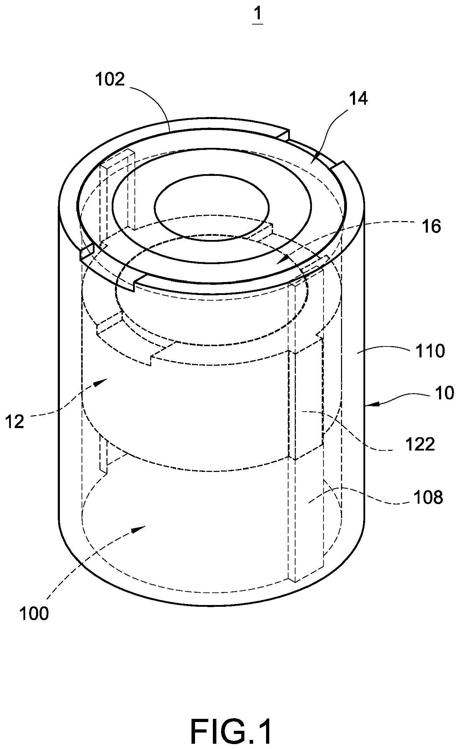

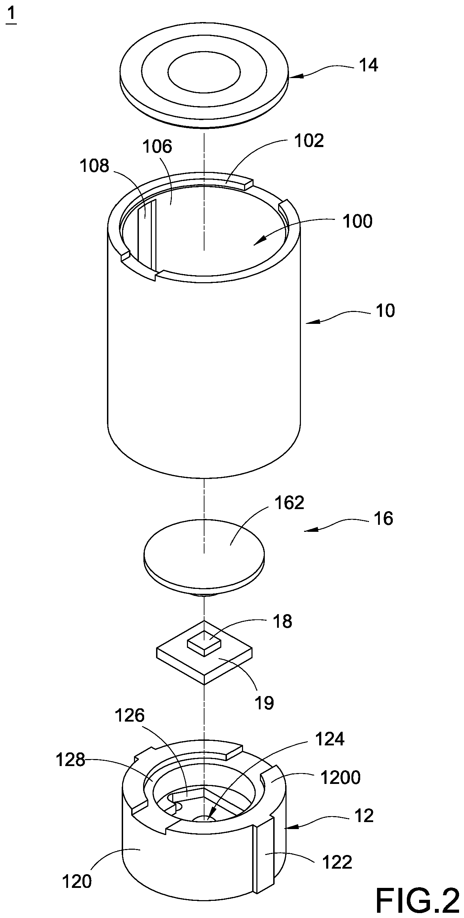

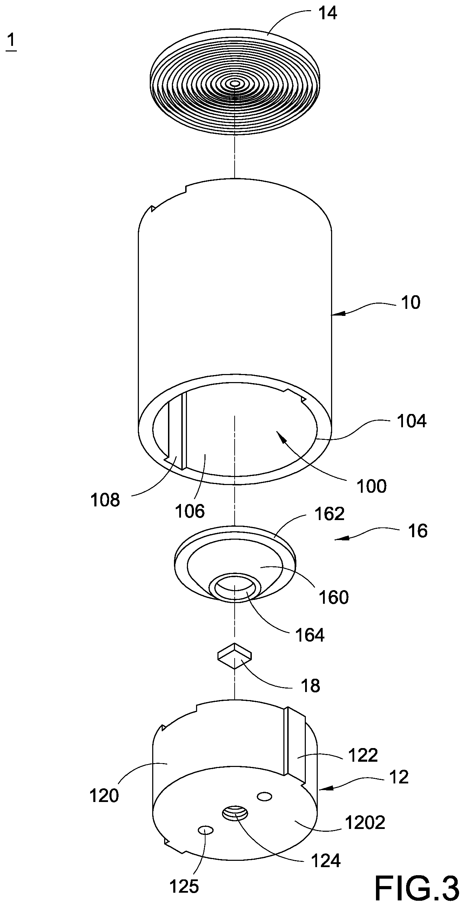

Reference is made to FIG. 1, FIG. 2, and FIG. 3, wherein FIG.1 is a perspective view of a luminous system according a first embodiment of the present disclosure, and FIG.2 and FIG.3 are assembled views of the luminous system according to the first embodiment of the present disclosure. The luminous system 1 is used to project a light ray onto a plane (such as wall, floor, ceiling, or other reference object). The luminous system 1 includes a luminous component 18 and an angle-adjustable device (its reference numeral is omitted). The angle-adjustable device is arranged between the plane and the luminous component 18, and located at an optical route of the light ray. The angle-adjustable device includes a lens barrel 10, a carrier 12, a first lens element 16, and a second lens element 14.

The profile of the lens barrel 10 is a cylindrical shape. The lens barrel 10 has an accommodating space 100. An upper opening 102 (shown in FIG. 2) and a lower opening 104 (shown in FIG.3) are formed at opposite sides of the lens barrel 10 and communicating with the accommodating space 100.

The lens barrel 10 further includes a plurality of engaging slots 108 formed on an inner wall 106 thereof, and concave towards a direction from the inner wall 106 to an outer wall 110. An amount of the engaging slots 108 can be one or more, and the engaging slots 108 are arranged in a spaced arrangement. In this embodiment, the lens barrel 10 includes two engaging slots 108 facing each other, wherein each engaging slot 108 extends linearly from the upper opening 102 to the lower opening 104, and a profile thereof is rectangular. The inner wall 106 of the lens barrel 10 can be coated with a reflecting film (not shown) for reflecting light transmitting thereon.

The carrier 12 is circular and includes engaging portions 122 formed on an outer wall 120 thereof. The outer surface 120 is adjacent to the upper surface 1200 and the lower surface 1202. In this embodiment, each engaging portion 122 is protrusive from the outer wall 120 with a rectangular shape in plan view. The height of the carrier 12 is smaller than that of the lens barrel 10. The carrier 12 is arranged within the accommodating space 100, and the engaging portions 122 are respectively accommodated within the engaging slots 108, such that the carrier 12 can move forward or downward corresponding to upper opening 102 (or the lower opening 104).

The carrier 12 has a disposing portion 126 and a fastening portion 128 (as shown in FIG. 2) formed thereon. The fastening portion 128 is concave toward a direction of the lower surface 1202 from the upper surface 1200, and the disposing portion 126 is located at the center of the fastening portion 128 and concave toward the direction of the lower surface 1202 from the upper surface 1200. The horizontal level of the disposing portion 126 is different from that of the fastening portion 128, and preferably the horizontal level of the disposing portion 126 is higher than that of the fastening portion 128.

At least one penetrating hole 124 and at least one through-hole 125 are formed on the disposing portion 126, and in this embodiment, the penetrating hole 124 with circular shape is located at the center of the carrier 12.

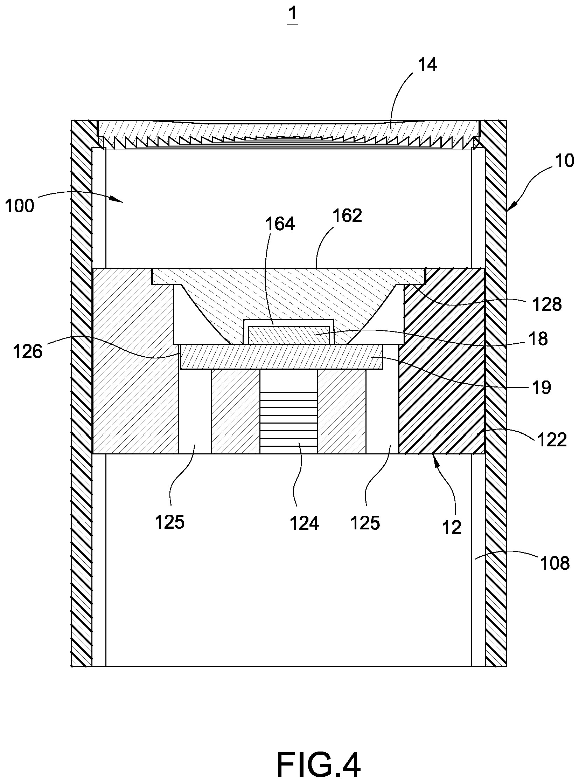

Reference is made to FIG. 4, wherein the upper opening 102 is enclosed by the second lens element 14. The second lens element 14 is, for example, a Fresnel lens, which can effectively reduce the volume and weight of the luminous system 1. It should be noted that, the second lens element 14 can be only one lens element with refractive power or combined with multiple lens elements with refractive power.

The first lens element 16 includes a light-incident portion 160 with a frustoconical shape and a light-emitting portion 162 with a plate shape and connected to the light-incident portion 160. The outer diameter of the light-emitting portion 162 is larger than that of the light-incident portion 160, and the outer diameter of the light-incident portion 160 decreases along a direction away from the light-emitting portion 162. The light-incident portion 160 has a recess 164 formed at a position opposite to the light-emitting portion 162. The first lens element 16 is disposed on the carrier 12, an outer edge of the light-emitting portion 162 is disposed on the fastening portion 128, and the light-incident portion 160 is located at the carrier 12 and opposite to the second lens element 14. It should be noted that, the first lens element 16 can be only one lens element with refractive power or combined with multiple lens elements with refractive power.

The luminous component 18 is disposed on the disposing portion 126 and under the recess 164 for generating light rays (or called light). The luminous system 1 can further include a circuit board 19 disposed on the disposing portion 126 for carrying the luminous component 18 and transmitting electric power for the luminous component 18. The circuit board 19 can be electrically connected to an external power supply via a plurality of wires (not shown), and the wires can physically and electrically connect to the circuit board 19 via the penetrating holes 124 or the through-holes 125.

The light generated from the luminous component 18 enters the first lens element 16 from the recess 164, a part of light entering the light-incident portion 160 is directly transmitted to the light-emitting portion 162 and emitted from the light-emitting portion 162, and the other part of the light is totally internally reflected by the light-incident portion 160 at first, transmitted to the light-emitting portion 162, and emitted from the light-emitting portion 162. The light exiting the first lens element 16 is then transmitted to the second lens element 14, and exits the luminous system 1.

The relative positions of the carrier 12 disposed within the accommodating space 100 and the first lens element 16 (the same as a distance between the first lens element 16 and the second lens element 14) are adjustable for changing the focal length of the luminous system 1, and thus the light pattern of the luminous system 1 can be further modulated. The luminous system 1 is applied to flashlight or projecting light.

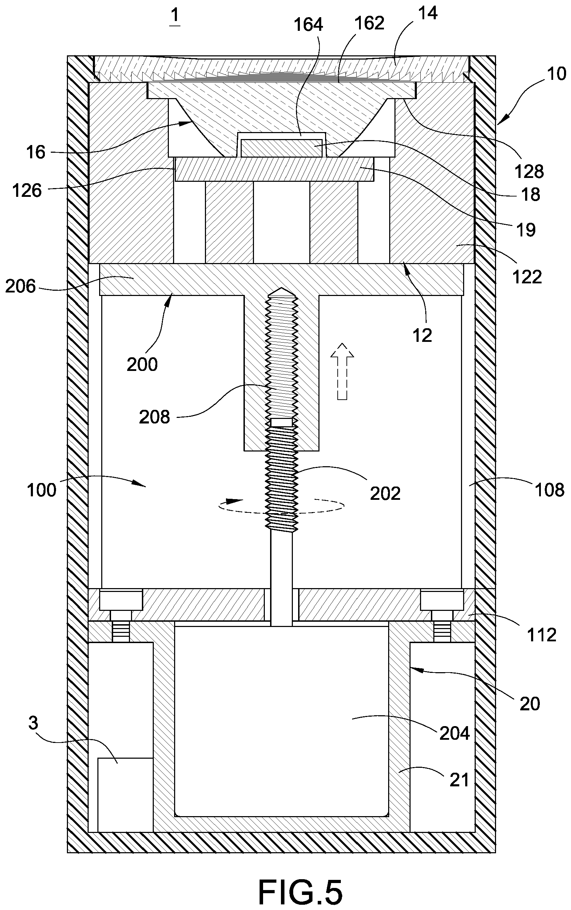

Reference is made to FIG. 5, wherein the angle-adjustable device includes a driving unit 20. The driving unit 20 for changing the distance between the first lens element 16 and the second lens element 14 can be manually operated or connected to an automatic controlling system (not shown). In particular, the automatic controlling system can be assembled on the luminous system 1 and thereby adjust the luminous angle thereof directly, or the automatic controlling system can adjust the luminous angle of the luminous system 1 via a network, such as a local area network (LAN) or the internet.

The driving unit 20 includes a base 200, a screw 202, and a motor 204. The base 200 includes a platform 206 and a threaded portion 208. The platform 206 is connected to the bottom of the carrier 12 and the threaded portion 208 is connected to the center of the platform 206, such that a profile of the base 200 is a T shape. One end of the screw 202 is connected to the motor 204 packaged within a case 21 and the other end of the screw 202 is engaged with the threaded portion 208. The motor 204 is arranged within the accommodating space 100 of the barrel 10.

When the motor 204 is driven, the screw 202 is then rotated, so as to rotate the threaded portion 208 to drive the carrier 12 to slide upwards and downwards. Therefore, the distance between the first lens element 16 and the second lens element 14 is changed, so as to adjust the luminous angle of the luminous system 1.

The luminous system 1 can further includes a wireless controlling module, such as a Bluetooth® controlling module, a radio frequency identification (RFID) module, or a ZigBee® module, thus the user can remotely operate the luminous system 1 by changing the distance between the first lens element 16 and the second lens element 14. The wireless controlling module includes, for example, a wireless receiver 3 and a wireless emitter (not shown), and the wireless receiver 3 can be assembled within the barrel 10 of the luminous system 1 and electrically connected to the motor 20, thus the motor 20 can be driven to change the distance between the first lens element 16 and the second lens element 14 while the wireless receiver 3 receives a signal from the wireless emitter.

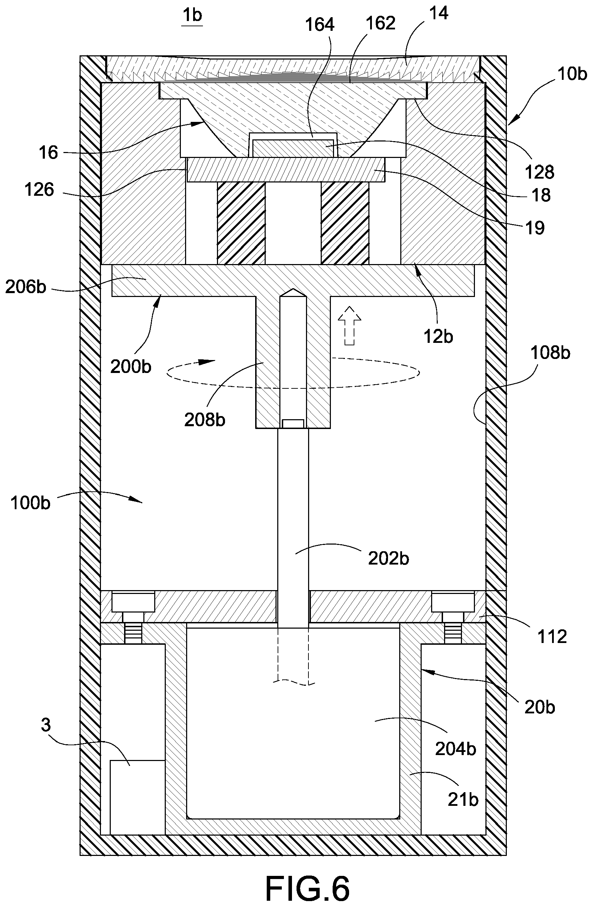

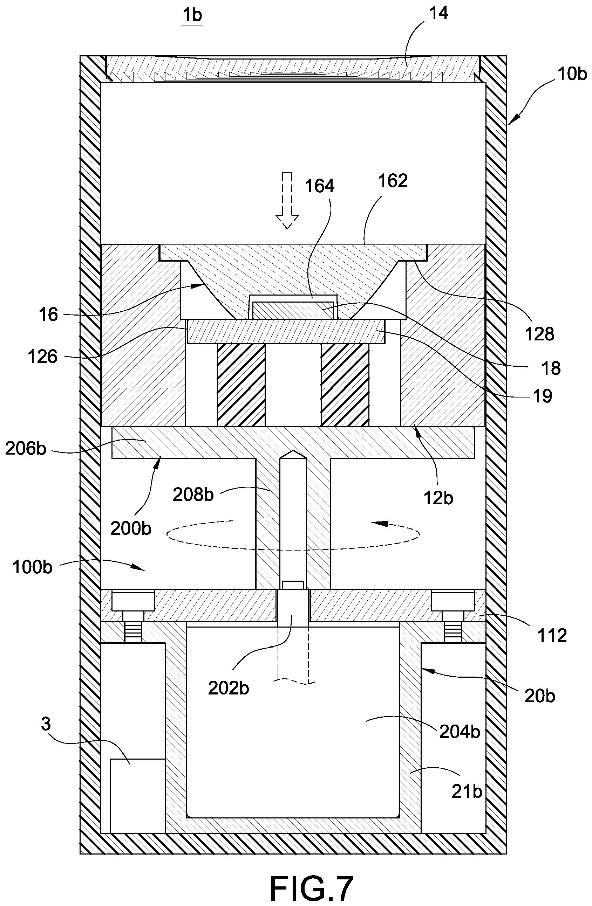

Reference is made to FIG. 6 and FIG. 7, which are respectively sectional views of a luminous system according to a second embodiment of the present disclosure. The luminous system 1b is similar to the luminous system 1 mentioned in the first embodiment, and the same reference numbers are used in the drawings and the description to refer to the same parts. It should be noted that the differences between the luminous system 1b in this embodiment and the luminous system 1 in the first embodiment is the barrel 10b, the carrier 12b, and the driving unit 20b.

An inner wall 108b of the barrel 10b is a smooth surface, which means that there is no engaging slot formed on the inner wall 108b. Besides, there is no engaging portion formed on the outer wall of the carrier 12b. Therefore, the carrier 12b not only can move upwards and downwards within the accommodating space 100b, but also can rotate within the accommodating space 100b.

The driving unit 20b includes a base 200b, a connecting rod 202b, and a motor 204b. The base 200b includes a platform 206b and a connected portion 208b, the platform 206b is connected to the bottom of the carrier 12b, and the connecting portion 208b is connected to the center of the platform 206b, such that a profile of the base 200b is substantially a T shape. One end of the connecting rod 202b is connected to the motor 204b packaged within a case 21b, and the other end of the connecting rod 202b is connected to the connecting portion 208b.

When the motor 204b is driven, the connecting rod 202b is then rotated and moved, so as to rotate and slide upwards and downwards the platform 206b to drive the carrier 12b to rotate and slide upwards and downwards. Therefore, the distance between the first lens element 16 and the second lens element 14 is changed, so as to adjust the luminous angle of the luminous system 1b.

Moreover, the motor 204b can be driven via a network, such as a LAN or the Internet, thereby adjusting the distance between the first lens element 16 and the second lens element 14 accordingly. Furthermore, the motor 204b can be electrically connected to a wireless receiver 3, and driven by a driving signal sent from the wireless receiver 3 while the wireless receiver 3 receives a wireless signal sent from a wireless emitter (not shown), thereby adjusting the distance between the first lens element 16 and the second lens element 14 accordingly.

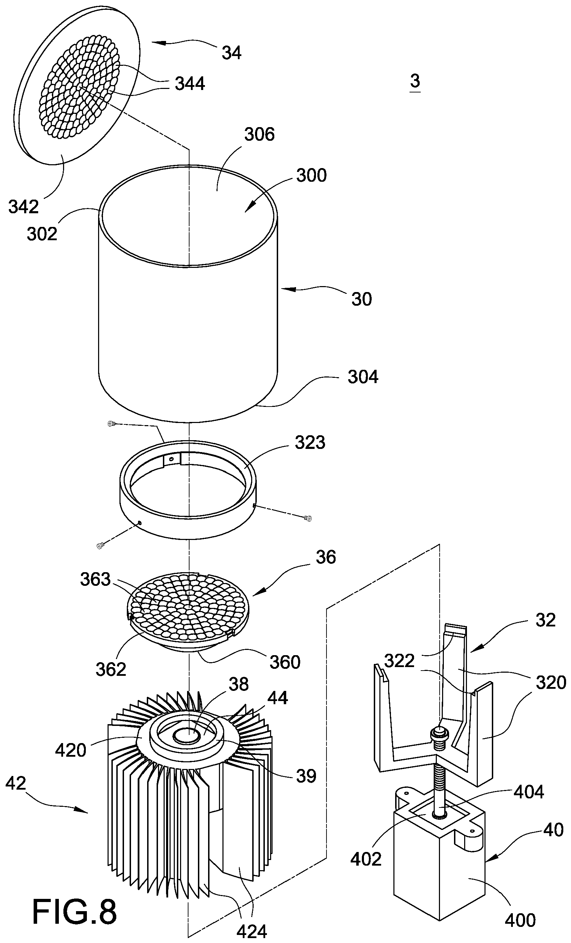

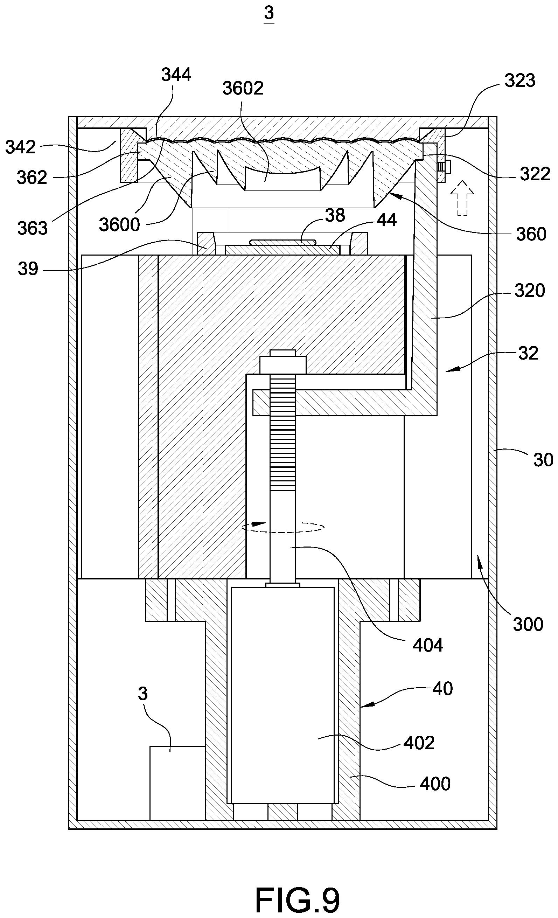

Reference is made to FIG. 8 and FIG. 9, which are respectively a perspective view and a sectional view of a luminous system according to a third embodiment of the present disclosure. The luminous system 3 is used to project a light ray (or called light) onto a plane (not shown). The luminous system 3 includes a luminous component 38 and an angle-adjustable device (its reference numeral is omitted). The angle-adjustable device for adjusting luminous angle is arranged between the plane and the luminous component 38, and located at an optical route of the light ray.

The angle-adjustable device includes a barrel 30, a carrier 32, a first lens element 36, a second lens element 34, a driving unit 40, and a heat-dissipating component 42. The barrel 30 being symmetrical has a profile of cylindrical shape. The lens barrel 30 has an accommodating space 300. An upper opening 302 and a lower opening 304 are formed at opposite sides of the lens barrel 30 and communicating with the accommodating space 300. The inner wall 306 of the lens barrel 30 can be coated with a reflecting film (not shown) for reflecting light transmitting thereon.

The carrier 32 is used for supporting the first lens element 36 onto the luminous component 38. When the driving unit 40 is driven, the connecting rod 404 thereof is then slid, so as to drive the first lens element 36 to slide upwards and downwards from the second lens element 34 within the accommodating space 300.

The upper opening 302 is enclosed by the second lens element 34. The second lens element 34 has a light-emitting surface, a light-incident surface opposite to the light-emitting surface, and a plurality of micro-lenses 344 formed on the light-incident surface. The micro-lenses 344 are arranged in a concentrical manner, wherein each of the micro-lenses 344 can be with positive refractive power or negative refractive power.

The first lens element 36 is disposed on the carrier 32. In this embodiment, the first lens element 36 includes a light-incident portion 360 and a light-emitting portion 362. The outer diameter of the light-emitting portion 362 is larger than that of the light-incident portion 360, and the outer diameter of the light-incident portion 360 decreases along a direction away from the light-emitting portion 362. The light-incident portion 360 has a plurality of light-guiding areas 3600 and a recess 3602 formed at a position opposite to the light-emitting portion 362.

The light-emitting portion 362 has a plurality of sub-lenses 363 formed in a surface close to the second lens element 34 and aligned with the micro-lenses 344. As shown in FIGs. 8 and 9, each of the micro-lenses 344 is concave towards a direction opposite to the first lens element 36, and the sub-lenses 363 protrude towards the second lens element, wherein each micro-lens 344 can have negative refractive power, and each sub-lens 363 may have positive refractive power. However, each of the micro-lenses 344 can have positive refractive power and protrude towards the first lens element 36, and each of the sub-lenses 363 can have negative refractive power and be concave toward a direction from the light-emitting portion to the light-incident portion. In the manners mentioned above, when the distance between the first lens element 36 and the second lens element 34 is zero, the sub-lenses 363 are in contact with the micro-lenses 344. In the practical applications, the micro-lenses 344 and the sub-lenses 363 can be both with positive refractive power or negative refractive power.

The light-guiding areas 3600 surround the recess 3602 in a concentrical manner for total-internal-reflecting light transmitting thereon to adjust the transmitting direction of light, thus light generated from the luminous component can be transmitted toward a direction of the light-emitting portion 362.

The carrier 32 includes a plurality of fixing arms 320. As can be shown in FIG. 8, the carrier 32 includes three fixing arms 320. A top end of each fixing arm 320 has a supporting portion 322 and an engaging component 323, which collectively fix the first lens element 36 by nipping an outer edge of the light-emitting portion 362. Thus, when the motor 402 is driven, the first lens element 36 can slide upward and downwards from the second lens element 34.

The heat-dissipating component 42 includes a cylinder 420 and a plurality of fins 424 formed on the outer wall of the cylinder in a radiative manner. The heat-dissipating component 42 is located between the driving unit 40 and the first lens element 36, and the fixing arms 320 of the carrier 32 pass through the opening formed on the heat-dissipating component 42 and supporting the first lens element 36 onto the heat-dissipating component 42.

The luminous system 3 can further include a circuit board 44 for carrying the luminous component 38 and transmitting electric power to the luminous component 38. The circuit board 44 is disposed on the top surface of the cylinder 420.

The driving unit 40 includes a housing 400, a motor 402, and a connecting rod 404. The motor 402 is disposed within the housing 400, one end of the connecting rod 404 is connected to the motor 402, and the other end thereof is connected to the carrier 32. When the motor 402 is driven, the connecting rod 404 drives the carrier slide upwards and downwards to adjust the distance between the first lens element 36 and the second lens element 34.

The luminous system 3 can also include a wireless controlling module, such as an infrared controlling module, Bluetooth® controlling module, or ZigBee® module, thus the distance between the first lens element 36 and the second lens element 34 can be adjusted by remote control. The fixing component has a sliding range since the allocation of the heat-dissipating component 42, and the motor 402 is automatically ceased when reaching the sliding range. Besides, the wireless controlling module can also make the motor stop sliding when an abnormal voltage signal or an abnormal current signal reaches the luminous system 3 to prevent the luminous system 3 from damage.

It should be noted that, in an arrangement not forming part of the invention, the luminous system can be operated without the second lens element 34. In the other words, the light pattern of the luminous system can be adjusted by adjusting the distance between the first lens element 36 and the luminous component 38.

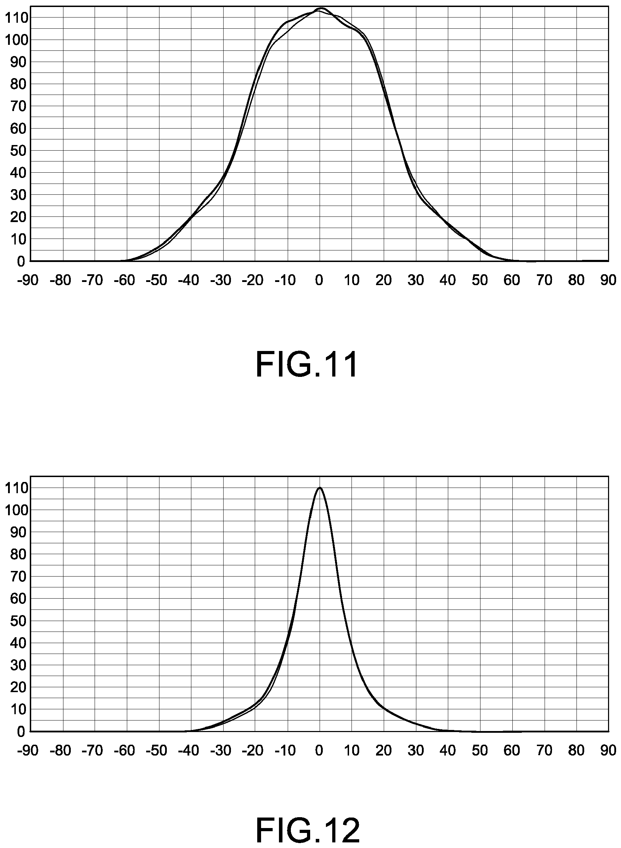

Reference is made to FIG. 11 and FIG. 12, wherein FIG. 11 is a schematic view of the luminous intensity distribution of the luminous system while the bottom edge of the first lens element 36 is aligned with the lower surface of the circuit board 44, and FIG. 12 is another schematic view of the luminous intensity distribution of the luminous system while the distance between the bottom edge of the first lens element 36 and the lower surface of the circuit board 44 is 2.8 millimeters. As can be shown in FIG. 11, light passing through the first lens element 36 is distributed over 49 degrees from the optical axis when the first lens element 36 is close to the luminous component 38. In this manner, a lot of light will pass through the recess 3602 and the light-guide areas 3600 close to the recess 3602. However, when the first lens element 36 is far away from the luminous component 38, light will be refracted by the light-guide areas 3600 and the recess 3602, and will be totally internally reflected by the light-incident portion 360, thus non-uniform luminous distribution with a ring pattern is generated.

In order to overcome the non-uniform luminous distribution, the luminous system 3 can further include a reflection baffle 39, thus scattering light with larger luminous angle can be eliminated, wherein the reflection baffle 39 surrounds the luminous component 38 and is disposed under the recess 3602. As can be shown in FIG. 12, light passing through the first lens element 36 is distributed over 15.5 degrees from the optical axis when the distance between the first lens element 36 and the luminous component 38 is 2.8 millimeters. In this manner, light generated from the luminous component 38 goes through the light-guiding areas 3600 and the recess 3602, and the light-incident portion 360 controls the luminous angle. To sum up, when the distance between the bottom edge (or bottom surface) of the first lens element 36 and the lower surface of the circuit board 44 gradually increases, light passing through the first lens element 36 converges at a direction along the optical axis accordingly.

Although the present invention has been described with reference to the foregoing preferred embodiment, it will be understood that the invention is not limited to the details thereof. Various equivalent variations and modifications can still occur to those skilled in this art in view of the teachings of the present invention. Thus, all such variations and equivalent modifications are also embraced within the scope of the invention as defined in the appended claims.

## Claims

1. A luminous system (3) used for projecting a light beam to a plane, the luminous system comprising:
a luminous component (38) for generating a light ray; and an angle-adjustable device for adjusting a luminous angle of the light ray arranged between the plane and the luminous component (38) and located on a route of the light ray, the angle-adjustable device comprising a first lens element (36), the first lens element (36) comprising a light-emitting portion (362) and a light-incident portion (360) connected to the light-emitting portion (362), the light-incident portion (360) comprising a recess (3602) opposite to the light-emitting portion (362) and a plurality of light-guiding areas (3600) surrounding the recess (3602);
wherein an outer diameter of the light-emitting portion (362) is larger than an outer diameter of the light-incident portion (360), and the outer diameter of the light-incident portion (360) decreases along a direction away from the light-emitting portion (362), the light-emitting portion (362) comprising a plurality of sub-lenses (363) formed on a surface thereof and far away from the light-incident portion (360);
wherein the angle-adjustable device further comprises a second lens element (34) arranged between the first lens element (36) and the plane,
the second lens element (34) comprising a light-incident surface close to the first lens element (36), a light-emitting surface opposite to the light-incident surface, and a plurality of micro-lenses (344) formed on the light-incident surface and aligned with the sub-lenses (363),
**characterized in that**
the angle-adjustable device further comprises a carrier (32) and a driving unit (40), the luminous component (38) being disposed on the carrier (32) and arranged beneath the recess (3602), wherein the driving unit (40) is connected to the carrier (32) for adjusting the distance between the first lens element (36) and the second lens element (34),
and wherein the carrier (32) includes a plurality of fixing arms (320), whereby a top end of each fixing arm (320) has a supporting portion (322) and an engaging component (323), which collectively fix the first lens element (36) by nipping an outer edge of the light-emitting portion (362), such that when a motor (402) of the driving unit (40) is driven, the first lens element (36) can slide upward and downwards from the second lens element (34);
and **in that** the luminous system comprises a lens barrel (30), the lens barrel having an accommodating space (300), an upper opening (302), and a lower opening (304), wherein the upper opening (302) and the lower opening (304) communicate with the accommodating space (300), the upper opening (302) is enclosed by the second lens (34), and the luminous component (38) and the angle-adjustable device are arranged within the accommodating space (300), respectively;
and **in that** when the distance between the first lens element (36) and the second lens element (34) is zero, the sub-lenses (363) are in contact with the micro-lenses (344).

2. The luminous system of claim 1, wherein the driving unit (40) is connected to the carrier (32) for adjusting the distance between the first lens element (36) and the luminous component (38) to adjust the luminous angle of the light ray.

3. The luminous system of claim 2, wherein the driving unit (40) comprises a motor (402), a connecting rod (404), and an engaging component (323), the connecting rod (404) is connected to the motor (402), and the engaging component (323) and the connecting rod (404) collectively fix the first lens element (36).

4. The luminous system of claim 3, further comprising a heat dissipating component (42), the heat dissipating component (42) comprising a plurality of fins (424) formed on an outer surface thereof, wherein the motor (402) is located at one side of the heat dissipating component (42), the luminous component (38) is located at the other side of the heat dissipating component (42), and the connecting rod (404) for supporting the first lens element (36) passes through an opening formed between the fins (424).

5. The luminous system of any of claims 1 to 4, further comprising a wireless receiver electrically connected to the driving unit (40).

## Patentansprüche

1. Leuchtsystem (3), das verwendet wird, um einen Lichtkegel auf eine Ebene zu projizieren, wobei das Leuchtsystem Folgendes umfasst:
eine Leuchtkomponente (38) zum Generieren eines Lichtstrahls; und
eine winkeleinstellbare Vorrichtung zum Einstellen eines Leuchtwinkels des Lichtstrahls, die zwischen der Ebene und der Leuchtkomponente (38) angeordnet ist und sich in einem Weg des Lichtstrahls befindet,
wobei die winkeleinstellbare Vorrichtung ein erstes Linsenelement (36) umfasst, wobei das erste Linsenelement (36) einen Lichtemissionsabschnitt (362) und einen Lichteinfallsabschnitt (360) umfasst, der mit dem Lichtemissionsabschnitt (362) verbunden ist, wobei der Lichteinfallsabschnitt (360) eine Vertiefung (3602) gegenüber dem Lichtemissionsabschnitt (362) und eine Vielzahl von Lichtführungsbereichen (3600) umfasst, welche die Vertiefung (3602) umgeben;
wobei ein Außendurchmesser des Lichtemissionsabschnitts (362) größer als ein Außendurchmesser des Lichteinfallsabschnitts (360) ist und sich der Außendurchmesser des Lichteinfallsabschnitts (360) entlang einer Richtung weg vom Lichtemissionsabschnitt (362) verringert, wobei der Lichtemissionsabschnitt (362) eine Vielzahl von Teillinsen (363) umfasst, die auf einer Fläche davon und weit weg vom Lichteinfallsabschnitt (360) ausgebildet sind;
wobei die winkeleinstellbare Vorrichtung ferner ein zweites Linsenelement (34) umfasst, das zwischen dem ersten Linsenelement (36) und der Ebene angeordnet ist, wobei das zweite Linsenelement (34) eine Lichteinfallsfläche in der Nähe des ersten Linsenelements (36), eine Lichtemissionsfläche gegenüber der Lichteinfallsfläche und eine Vielzahl von Mikrolinsen (344) umfasst, die auf der Lichteinfallsfläche ausgebildet und an den Teillinsen (363) ausgerichtet sind,
**dadurch gekennzeichnet, dass**
die winkeleinstellbare Vorrichtung ferner einen Träger (32) und eine Antriebseinheit (40) umfasst, die Leuchtkomponente (38) auf dem Träger (32) angeordnet ist und unterhalb der Vertiefung (3602) angeordnet ist, wobei die Antriebseinheit (40) mit dem Träger (32) verbunden ist, um den Abstand zwischen dem ersten Linsenelement (36) und dem zweiten Linsenelement (34) einzustellen, und wobei der Träger (32) eine Vielzahl von Fixierarmen (320) beinhaltet, wobei ein oberes Ende jedes Fixierarms (320) einen Stützabschnitt (322) und eine Eingriffskomponente (323) aufweist, welche das erste Linsenelement (36) gemeinsam durch Kneifen einer Außenkante des Lichtemissionsabschnitts (362) derart fixieren, dass, wenn ein Motor (402) der Antriebseinheit (40) angetrieben wird, das erste Linsenelement (36) vom zweiten Linsenelement (34) aus nach oben und nach unten gleiten kann;
und dadurch, dass das Leuchtsystem einen Objektivtubus (30) umfasst, wobei der Objektivtubus einen Aufnahmeraum (300), eine obere Öffnung (302) und eine untere Öffnung (304) aufweist, wobei die obere Öffnung (302) und die untere Öffnung (304) mit dem Aufnahmeraum (300) verbunden sind, wobei die obere Öffnung (302) durch die zweite Linse (34) umschlossen ist und wobei die Leuchtkomponente (38) und die winkeleinstellbare Vorrichtung innerhalb des Aufnahmeraums (300) angeordnet sind;
und dadurch, dass, wenn der Abstand zwischen dem ersten Linsenelement (36) und dem zweiten Linsenelement (34) null ist, die Teillinsen (363) die Mikrolinsen (344) berühren.

2. Leuchtsystem nach Anspruch 1, wobei die Antriebseinheit (40) mit dem Träger (32) verbunden ist, um den Abstand zwischen dem ersten Linsenelement (36) und der Leuchtkomponente (38) einzustellen, um den Leuchtwinkel des Lichtstrahls einzustellen.

3. Leuchtsystem nach Anspruch 2, wobei die Antriebseinheit (40) einen Motor (402), eine Pleuelstange (404) und eine Eingriffskomponente (323) umfasst, wobei die Pleuelstange (404) mit dem Motor (402) verbunden ist und die Eingriffskomponente (323) und die Pleuelstange (404) das erste Linsenelement (36) gemeinsam fixieren.

4. Leuchtsystem nach Anspruch 3, ferner umfassend eine Wärmeableitungskomponente (42), wobei die Wärmeableitungskomponente (42) eine Vielzahl von Lamellen (424) umfasst, die auf einer Außenfläche davon ausgebildet sind, wobei sich der Motor (402) auf einer Seite der Wärmeableitungskomponente (42) befindet, sich die Leuchtkomponente (38) auf der anderen Seite der Wärmeableitungskomponente (42) befindet und die Pleuelstange (404) zum Stützen des ersten Linsenelements (36) durch eine Öffnung verläuft, die zwischen den Lamellen (424) ausgebildet ist.

5. Leuchtsystem nach einem der Ansprüche 1 bis 4, ferner umfassend einen drahtlosen Empfänger, der elektrisch mit der Antriebseinheit (40) verbunden ist.

## Revendications

1. Système lumineux (3) utilisé pour projeter un faisceau de lumière sur un plan, le système lumineux comprenant :
un composant lumineux (38) pour générer un rayon de lumière ; et
un dispositif de réglage d'angle pour régler un angle lumineux du rayon de lumière agencé entre le plan et le composant lumineux (38) et situé sur un trajet du rayon de lumière,
le dispositif de réglage d'angle comprenant un premier élément de lentille (36), le premier élément de lentille (36) comprenant une portion d'émission de lumière (362) et une portion de lumière incidente (360) connectée à la portion d'émission de lumière (362), la portion de lumière incidente (360) comprenant un évidement (3602) opposé à la portion d'émission de lumière (362) et une pluralité de zones de guidage de lumière (3600) entourant l'évidement (3602) ;
dans lequel un diamètre extérieur de la portion d'émission de lumière (362) est plus grand qu'un diamètre extérieur de la portion de lumière incidente (360), et le diamètre extérieur de la portion de lumière incidente (360) diminue suivant une direction loin de la portion d'émission de lumière (362), la portion d'émission de lumière (362) comprenant une pluralité de sous-lentilles (363) formées sur une surface de celle-ci et éloignées de la portion de lumière incidente (360) ;
dans lequel le dispositif de réglage d'angle comprend en outre un second élément de lentille (34) agencé entre le premier élément de lentille (36) et le plan,
le second élément de lentille (34) comprenant une surface de lumière incidente proche du premier élément de lentille (36), une surface d'émission de lumière opposée à la surface de lumière incidente, et une pluralité de microlentilles (344) formées sur la surface de lumière incidente et alignées sur les sous-lentilles (363),
**caractérisé en ce que**
le dispositif de réglage d'angle comprend en outre un support (32) et une unité d'entraînement (40), le composant lumineux (38) étant disposé sur le support (32) et agencé en dessous de l'évidement (3602), dans lequel
l'unité d'entraînement (40) est raccordée au support (32) pour régler la distance entre le premier élément de lentille (36) et le second élément de lentille (34),
et dans lequel
le support (32) comporte une pluralité de bras de fixation (320), moyennant quoi une extrémité haute de chaque bras de fixation (320) a une portion de support (322) et un composant d'enclenchement (323), qui fixent collectivement le premier élément de lentille (36) en pinçant un bord extérieur de la portion d'émission de lumière (362), de sorte que lorsqu'un moteur (402) de l'unité d'entraînement (40) est entraîné, le premier élément de lentille (36) puisse glisser vers le haut et vers le bas depuis le second élément de lentille (34) ;
et **en ce que** le système lumineux comprend un barillet de lentille (30), le barillet de lentille ayant un espace de logement (300), une ouverture supérieure (302), et une ouverture inférieure (304), dans lequel l'ouverture supérieure (302) et l'ouverture inférieure (304) communiquent avec l'espace de logement (300),
l'ouverture supérieure (302) est encloisonnée par la seconde lentille (34), et le composant lumineux (38) et le dispositif de réglage d'angle sont agencés au sein de l'espace de logement (300), respectivement ;
et **en ce que** lorsque la distance entre le premier élément de lentille (36) et le second élément de lentille (34) est nulle, les sous-lentilles (363) sont en contact avec les microlentilles (344).

2. Système lumineux selon la revendication 1, dans lequel l'unité d'entraînement (40) est raccordée au support (32) pour régler la distance entre le premier élément de lentille (36) et le composant lumineux (38) pour régler l'angle lumineux du rayon de lumière.

3. Système lumineux selon la revendication 2, dans lequel l'unité d'entraînement (40) comprend un moteur (402), une bielle (404), et un composant d'enclenchement (323), la bielle (404) est raccordée au moteur (402), et le composant d'enclenchement (323) et la bielle (404) fixent collectivement le premier élément de lentille (36).

4. Système lumineux selon la revendication 3, comprenant en outre un composant de dissipation de chaleur (42), le composant de dissipation de chaleur (42) comprenant une pluralité d'ailettes (424) formées sur une surface extérieure de celui-ci, dans lequel le moteur (402) est situé d'un côté du composant de dissipation de chaleur (42), le composant lumineux (38) est situé de l'autre côté du composant de dissipation de chaleur (42), et la bielle (404) pour supporter le premier élément de lentille (36) passe à travers une ouverture formée entre les ailettes (424).

5. Système lumineux selon l'une quelconque des revendications 1 à 4, comprenant en outre un récepteur sans fil connecté électriquement à l'unité d'entraînement (40).
